# EUROPEAN PATENT APPLICATION

(11) **EP 4 306 453 A1**
(43) Date of publication of application: **17.01.2024**
(21) Application number: 23184076.0
(22) Date of filing: 07.07.2023
(51) Int. Cl.: B65G 17/08

(54) **MODULE OF A CURVILINEAR MODULAR FIXED-RADIUS CONVEYOR BELT AND CORRESPONDING BELT**

(30) Priority: 15.07.2022 IT 202200014914
(71) Applicant: Regina Catene Calibrate S.p.A., 20122 Milano (MI) (IT)
(72) Inventor: GARBAGNATI, Carlo, 23884 CASTELLO DI BRIANZA (LC) (IT); CATTANEO, Norberto, 20865 USMATE VELATE (MB) (IT)
(74) Representative: Cosenza, Simona

(57) **Abstract**

Module (10, 10') of a curvilinear modular fixed-radius conveyor belt (100, 100', 100'') adapted to travel a corresponding curved path, such module (10, 10') comprising a main body (11, 11') extending between an upper surface (12, 12') forming a support plane (PA) of products to be conveyed and a lower surface (13, 13') forming a lower plane (PI) spaced from the support plane (PA), wherein the main body (11, 11') has a first longitudinal edge (17, 17') and a second longitudinal edge (18, 18') opposite to each other and from each of which protrude respectively at least one first hinge element (15, 15') and at least one second hinge element (16, 16'), each of which is crossed by a respective through hole (150, 150'; 160, 160') adapted to accommodate a hinge pin (19) articulating the module (10, 10') with another module (10, 10') adjacent thereto around an articulation axis parallel to the support plane (PA) and orthogonal to the advancement direction of the belt (100, 100', 100''), wherein the main body (11, 11') in plan has an overall trapezoidal shape, whose smaller and larger bases define the side of the belt (100, 100', 100") respectively facing the inner and outer side of the curved path, wherein the main body (11, 11') has at least one hollow seat (23, 23') open at the lower plane (PI) and wherein a support (24) for at least one radial reaction element (25) adapted to slidingly rest along a corresponding wall (203) defining the curved path is insertable, wherein such seat (23, 23') is shaped to accommodate an identical support (24) regardless of the radial position in which it is obtained along the main body (11, 11').

## Description

The present invention refers to a module of a curvilinear modular fixed-radius conveyor belt adapted to travel a corresponding curved path.

The present invention also refers to a modular fixed-radius conveyor belt adapted to travel a corresponding curved path and comprising a plurality of such modules.

In the field of conveying lines particularly used in plants for palletizing products, such as for example bottles, cans, or similar, the use of curvilinear conveyor belts is known. Such belts are particularly used for limiting the overall bulk of the conveying line. For example, in case of plants for palletizing bundles of bottles, cans, or similar wound in shrink wraps, the curvilinear conveyor belts are used in the so-called "end line" sections between the heat-shrinking furnace and the palletizer.

The known conveyor belts generally have a length comprised between 300 mm and 1000 mm as a function of the typology of products to be conveyed or the bundles, trays, or boxes in which the single products are grouped or collected.

Reference is particularly made to a modular-type curvilinear conveyor belts, i.e., consisting of a plurality of modules or meshes arranged in succession to each other and articulated to each other by respective hinge pins.

With reference to modular-type curvilinear conveyor belts, they can be distinguished in two typologies:
- Curvilinear modular belts made with a series of modules which, in plan, have a substantially rectangular shape and which, along a direction transverse to the travel direction of the belt, are brick mounted. Belts of this typology are adapted to travel both rectilinear sections and curvilinear sections. Examples of such belts are known from EP1739034, US5573105, EP2855308 or EP2962963.
- Curvilinear modular belts made with a series of modules which, in plan, have a substantially trapezoidal shape and which are mounted side by side and aligned to each other by radial interlocking. Belts of this typology are generally referred to as curvilinear fixed-radius belts, being adapted to travel only curvilinear paths with a non-modifiable minimum curvature radius. See, for example, US3854575.

Unlike the belts of the first typology, the curvilinear fixed-radius belts, having substantially trapezoidal-shaped modules, have a radially variable pitch, i.e., along a direction orthogonal to the travel direction and extending along a radial direction of the curved path, and are arranged according to a conical envelope. As those skilled in the art can immediately understand, the pitch, i.e., the distance between the holes of the hinge elements protruding from the opposite longitudinal edges of the same module, radially increases (transversally to the travel direction) from the inner side of the curved path towards the outer side of the curved path.

As intended in the present description, travel or advancement or conveying direction means the point tangent to the curvilinear extension of the curved path.

With respect to the belts of the second typology (i.e., "fixed radius"), the belts of the first typology have the advantage to require a lower number of motorizations. Indeed, being able to travel both rectilinear and curvilinear sections, they are usable to make a single mixed-layout conveyor, with rectilinear and curvilinear sections, dragged by a single motorization. The belts of the second typology, on the other hand, being able to travel only curvilinear sections, require a motorization independent from that of belts forming the rectilinear sections preceding and/or following them.

The operation limits of the curvilinear belts of the first typology, however, lie in a reduced mechanical strength, particularly fatigue strength, of the hinge elements and, particularly, of the outermost hinge elements of the curved path; at the latter, indeed, the pulling force is located.

A further operation limit of the curvilinear belts of the first typology lies in their reduced employment safety, intended as safety for the operators. The possibility to curve in the plane, indeed, is substantially related to the plays and openings between the hinge elements of the modules articulated to each other. These plays and openings can be potential risk zones for the safety of the operators.

In order to limit the pulling stresses generating in operation conditions on belts of the first typology, they are generally provided with radial bearings generally arranged in proximity to the outer side of the belt, i.e., the outer side of the curved path. See for example WO2009106953.

With respect to the belts of the first typology, those of the second typology (i.e., fixed radius) have a greater mechanical strength since substantially all the hinge elements of each module react to the pulling stress. A greater mechanical strength allows to use, for the same conveyed load, modules of lower thickness and hinge pins of smaller diameter, thus making belts of overall weight lower than that of a corresponding belt of the first typology.

With respect to the belts of the first typology, furthermore, the curvilinear fixed-radius belts allow narrower curved paths, i.e., with a smaller radius of curvature, to be made, thus further reducing the bulk of the conveying line. The modules of the curvilinear fixed-radius belts further form a substantially "closed" and "continuous" conveying plane, i.e., free of openings and plays which are instead present in and between the articulating modules of the curvilinear belts of the first typology; with respect to the latter, thus, they offer a greater employment safety.

The present invention refers to modules and curvilinear conveyor belts of the second typology, i.e., of the fixed-radius type.

The curvilinear fixed-radius conveyor belts are generally used in a mono-filar (mono-route) or multi-filar (or multi-route, actually limited to only two rows or routes) configuration.

The mono-filar curvilinear fixed-radius conveyor belts (i.e., with a single row, route, or track formed by a single belt) are installed on the support and guide structure of the conveyor such that the radial reaction related to the normal conveying condition is reacted by a radial bearing installed directly on the support and guide structure on the inner side (i.e., the smaller-radius one) of the curved path. The bearing is arranged with an axis orthogonal to the conveying plane and at such a height that its median plane is substantially co-planar with the plane containing the axis of the hinge pins. Such arrangement allows to eliminate the overturning component acting on the belt, i.e., allowing in-curve retaining elements such as for example protrusions, tongues, or anti-overturning tilted planes (referred to as "tab," "bevel," or similar) not to be employed.

The multi-filar curvilinear fixed-radius conveyor belts (generally with two rows or routes) comprise two or more belts independent to each other placed side by side to form a continuous plane: one innermost and the other outermost with respect to the centre of curvature of the curved path. The radial reaction of the innermost belt is reacted by a radial bearing mounted on the support and guide structure exactly like in the case of a mono-filar belt. Instead, regarding the outermost belt, it is not possible to have radial reaction bearings therefor, fixed to the support and guide structure in a configuration and arrangement similar to those adopted for the mono-filar one. In such case, thus, the radial reaction elements (i.e., bearings) are mounted directly on the modules of the belt in a position lower than the plane containing the axis of the hinge pins. Such bearings react with corresponding borders of the support and guide structure.

In particular, curvilinear fixed-radius belts marketed as "Side Flex Modular Belt - ZERO520 Contact PRO", on which the radial reaction bearings are mounted on a respective module by means of supports spaced at intervals with the hinge elements and articulating with both the hinge pins by means of which such same module is articulated to the two preceding and following modules, are known.

Indeed, such supports have an elongated base body at the two opposite ends thereof a respective through hole adapted to align with the openings of the hinge elements protruding from the opposite longitudinal edges of a same module to receive the respective hinge pin articulating such module with the two modules adjacent thereto, respectively preceding and following, is obtained.

It is apparent for those skilled in the art that such a known solution allows the radial reaction bearings to be mounted only and exclusively in the radial position (i.e., the position along a radial direction with respect to the curved path) corresponding to the pitch (i.e., interaxle spacing between the two holes accommodating the hinge pins) of the respective support. The supports of the bearings are constrained to both the articulation pins of the module and, thus, are constrained to the pitch the module/belt has in that precise radial position. Since the pitch of the module/belt varies along a radial direction upon varying the distance from the centre of curvature of the curved path (it increases from the inner side towards the outer side of the curved path), such supports can be mounted only and exclusively in one same radial position, i.e., only and exclusively in one same position with respect to the width of the module/belt itself (where "width" means the longitudinal extension of the module/belt along a direction transverse/orthogonal to the travel direction). This limits the possibility to make configurations of multi-filar or multi-route belt. In order to arrange the bearings in different radial positions, there is a need for a corresponding plurality of supports differing to each other in the pitch.

In curvilinear fixed-radius belts and, in particular, in those forming the outermost row or track of multi-filar conveyors, the radial reaction bearings mounted directly on the belt can be installed in a fixed position determined by the pitch the belt has in that specific position.

If the radial reaction bearings are positioned in a different radial position, one should have as many different supports (different from each other in the mounting pitch) as the radial positions in which the bearings could be positioned. This evidently involves the need for a wide range of spares with consequent complications and costs in terms of production, warehouse, and spares.

An object of the present invention is to make a module of a curvilinear modular fixed-radius conveyor belt adapted to travel a corresponding curved path and a corresponding modular conveyor belt overcoming the known-art drawbacks.

An object of the present invention is to provide a module of a curvilinear modular fixed-radius conveyor belt adapted to travel a corresponding curved path and a corresponding modular conveyor belt allowing radial reaction elements to be mounted directly on the module and on the belt in a plurality of different radial positions, i.e., regardless of the pitch the module and the belt have in different radial positions, being thus able to increase the possibility to make different configurations of curvilinear modular fixed-radius conveyor belts particularly both in mono-route installations and multi-route installations.

Another object of the present invention is to provide a module of a curvilinear modular fixed-radius conveyor belt adapted to travel a corresponding curved path and a corresponding modular conveyor belt allowing different possible configurations of mono-filar or multi-filar curvilinear modular conveyor belts with a limited number of components and spares to be made.

Another object of the present invention is to make a module of a curvilinear modular fixed-radius conveyor belt adapted to travel a corresponding curved path and a corresponding modular conveyor belt which are particularly simple and functional, with low costs.

These objects according to the present invention are achieved by making a module of a curvilinear modular fixed-radius conveyor belt adapted to travel a corresponding curved path as set forth in claim 1.

These objects according to the present invention are achieved by making a support for at least one radial reaction element couplable with such module as defined in claim 10.

These objects according to the present invention are achieved by making a curvilinear modular fixed-radius conveyor belt adapted to travel a corresponding curved path as set forth in claim 16.

Further features are provided in the dependent claims.

The features and advantages of a module of a curvilinear modular fixed-radius conveyor belt adapted to travel a corresponding curved path and a corresponding modular conveyor belt according to the present invention will be more apparent from the following, exemplary and non-limiting, description referred to the attached schematic drawings, in which:
figures 1, 2, 3, 4, and 5 are top plan, front, bottom plan, and side views, respectively, of a first module according to the present invention, particularly suitable to make a mono-filar conveyor or the innermost section of the corresponding belt or the innermost belt of a multi-filar conveyor;
figure 6 is an axonometric view of the module of figures 1 to 5;
figure 6A is an elnlargementof the details underlined in figure 6;
figures 7, 8, 9, 10 and 11 are top plan, front, bottom plan, and side views, respectively, of a second module according to the present invention, particularly suitable to make a mono-filar conveyor or the outermost or intermediate section of the corresponding belt or the outermost or intermediate belt of a multi-filar conveyor;
figure 12 is an axonometric view of the module of figures 7 to 11;
figure 12A is an enlargementof the details underlined in figure 12;

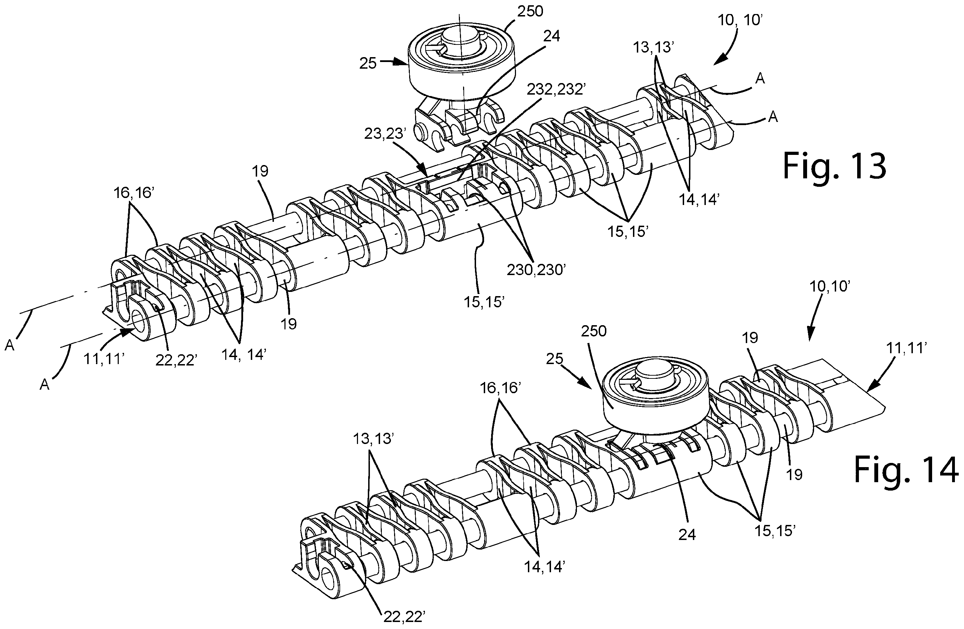

figures 13 and 14 show in axonometry a section of a module and a support for a radial reaction element according to the present invention respectively in a mounted and dismounted configuration;

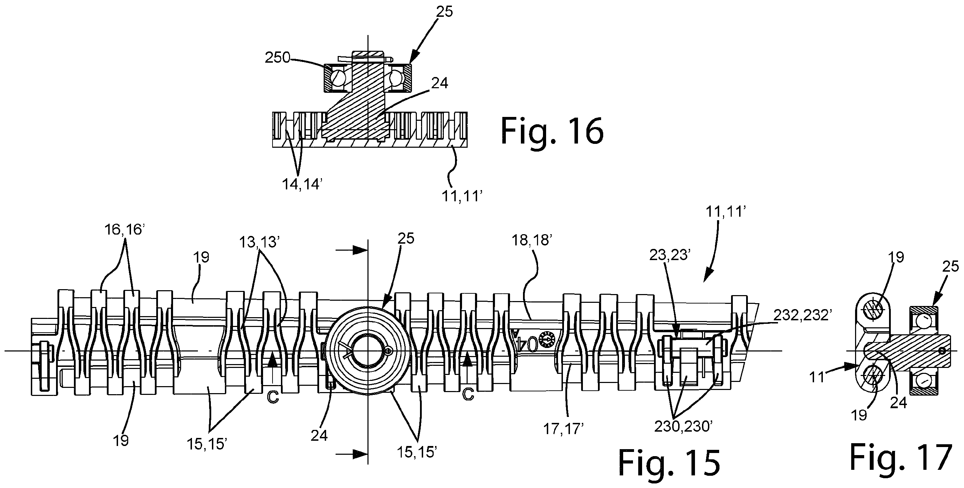

figures 15, 16 and 17 are a plan view of figure 14 and a sectional view, respectively, along the planes XVI-XVI and XVII-XVII;
figures 18 to 24 show in axonometry and according to the six orthogonal views a support for a radial reaction element couplable to a module according to the present invention;
figures 25 and 26 show in axonometry, respectively in a dismounted and mounted configuration, a support couplable to a module according to the present invention and a respective radial reaction element in the form of a radial bearing;
figure 27 shows a section of a first possible configuration of a mono-route conveyor comprising a curvilinear fixed-radius belt according to the present invention and the respective support and guide structure;
figure 27A shows on an enlarged scale the detail of figure 27;
figure 28 shows a bottom plan view of figure 27;
figure 29 is a cross-section of figure 27;
figure 29A shows on an enlarged scale the detail of figure 29;
figure 30 shows a section of a second possible configuration of a mono-route conveyor comprising a curvilinear fixed-radius belt according to the present invention and the respective support and guide structure;
figure 31 shows a bottom plan view of figure 30;
figure 31A shows on an enlarged scale the detail of figure 31;
figure 32 is a cross-section of figure 30;
figure 32A shows on an enlarged scale the detail of figure 32;
figure 33 shows a section of a possible configuration of a multi-route conveyor comprising two curvilinear fixed-radius belts according to the present invention placed side by side and the respective support and guide structure;
figures 33A and 33B show on an enlarged scale the details of figure 33 respectively illustrating the radial reaction elements of the innermost belt and the outermost belt;
figure 34 shows a bottom plan view of figure 33;
figures 34A and 34B show in section and on an enlarged scale details of figure 34 respectively illustrating the radial reaction elements of the innermost belt and the outermost belt.

With reference to the attached figures, a module 10, 10' of a curvilinear modular fixed-radius conveyor belt 100, 100' adapted to travel a corresponding curved path, generally flat, is shown.

In the following description, the adjective "radial" is referred to the curved extensions of the belt 100, 100' or the curved path along which it runs, referring to the respective centre of curvature in the plane. Similarly, adjectives such as "inner" and "outer" are referred to the curved extension of the belt 100, 100' or the curved path along which it runs, where "inner" means the side of the module, belt, or path closer to the centre of curvature or having a smaller radius, and "outer" means the side of the module, belt, or path further from the centre of curvature or having a greater radius.

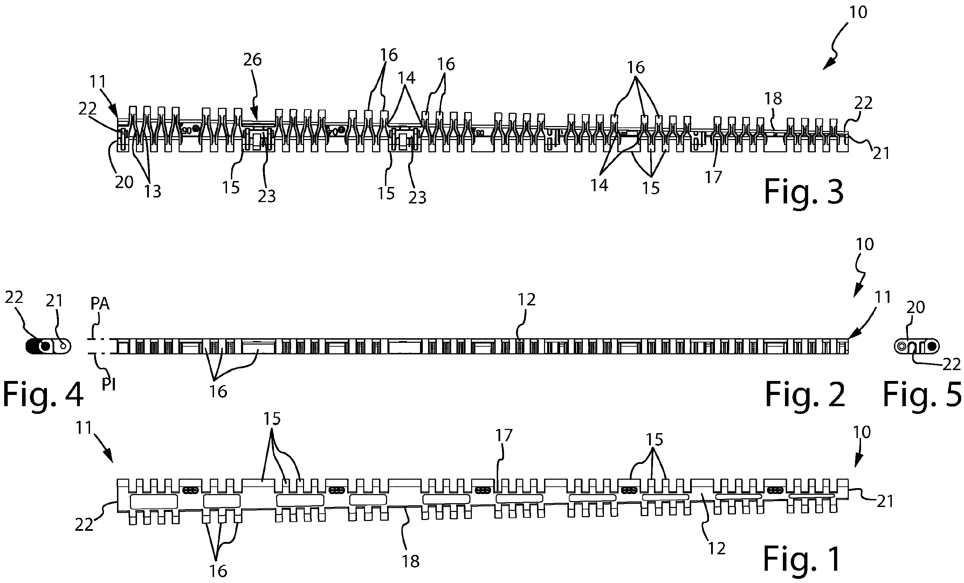

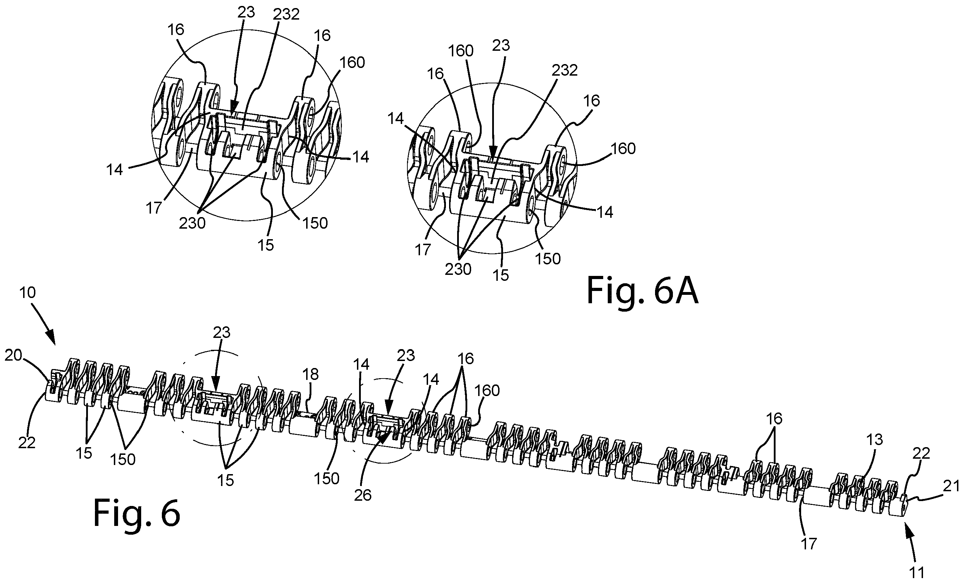

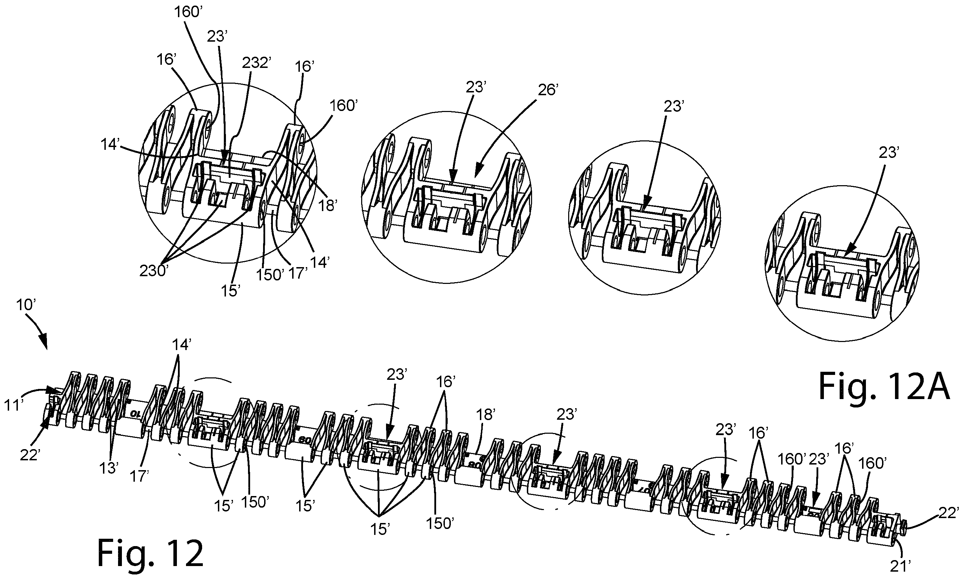

Then, an apex "'" denotes similar reference numbers referred to elements corresponding to the two possible embodiments of the module 10, 10' respectively shown in figures 1 to 6A and 7 to 12A and differing to each other in the minimum radius of curvature of the belt 100, 100' makeable therewith. As it will be more apparent below, the modules 10 and the modules 10' can be arranged side by side and aligned to each other with the respective ends adjacent to each other being interlocked to form a single assembly by which a single belt of a width equal to the sum of the widths of the two modules 10, 10' can be made. The two modules 10, 10' can also be used to make respective belts independent to each other placed side by side, the first of which has a smaller radius of curvature than the second and forming an innermost belt of a two-route conveyor. The modules 10, 10' can be further cut at dedicated notches distributed along their length with fixed radial increasing, for example equal to 85 mm, to be able to make configurations of belt with intermediate widths (for example 340 mm, 510 mm, 595 mm, etc.).

The module 10, 10' comprises a main body 11, 11' extending between an upper surface 12, 12' forming a support plane PA of products to be conveyed and a lower surface 13, 13' forming a lower plane PI spaced from the support plane PA.

The upper surface 12, 12' in the depicted exemplary embodiments is flat and continuous; however, alternative embodiments in which, for example, it is provided with rubbered plugs are not excluded.

The lower surface 13, 13' is generally discontinuous; for example, in the depicted embodiments, the lower surface 13, 13' is defined by the lower surface of the ribs 14, 14' connecting the hinge elements 15, 15' and 16, 16'.

The support plane PA and the lower plane PI can be defined, respectively, by the upper surface 12, 12' and the lower surface 13, 13' or, if they are not wholly flat, by planes tangent thereto and parallel to each other.

The main body 11, 11' further has a pair of opposite longitudinal edges, respectively a first longitudinal edge 17, 17' and a second longitudinal edge 18, 18', from each of which protrudes at least one hinge element, respectively at least one first hinge element 15, 15' and at least one second hinge element 16, 16'.

Each first hinge element 15, 15' and each second hinge element 16, 16' is crossed by a respective through hole 150, 150' and 160, 160' adapted to accommodate a respective hinge pin 19 articulating the module 10, 10' with another equal module 10, 10' adjacent thereto around an articulation axis A-A parallel to the support plane PA and orthogonal to the advancement direction of the belt 100, 100'.

Along the first longitudinal edge 17, 17' a plurality of first hinge elements 15, 15' spaced from each other with an also variable pitch to form corresponding gaps accommodating corresponding second hinge elements 16, 16' of a following module 10, 10' are distributed.

Similarly, along the second longitudinal edge 18, 18' a plurality of second hinge elements 16, 16' spaced from each other with an also variable pitch to form corresponding gaps accommodating corresponding first hinge elements 15, 15' of a following module 10, 10' are distributed.

As noted, the distance between the axes of the holes 150, 150' and 160, 160' of each module 10, 10', i.e., the pitch, varies upon varying the radial distance with respect to the centre of curvature of the belt 100, 100', increasing upon increasing such radial distance.

The first hinge elements 15, 15' and the second hinge elements 16, 16' are joined to each other by transverse ribs 14, 14' protruding below the upper surface 12, 12' of the main body 11, 11'.

It is specified that using the adjectives "first" and "second" is intended only for purposes of clarity of exposition and does not have any limiting intention.

Advancement direction or travel direction or conveying direction of the belt 100, 100' are particularly intended to denote the tangent, point by point, to the curvilinear development D-D of the belt itself, i.e., of the respective curved path along which it runs.

As visible in figures (figures 1 and 3; figures 7 and 9) the main body 11, 11', in a plan view, has an overall trapezoidal shape whose smaller base and whose larger base respectively define the side of the module or the belt 100, 100' facing the inner side of the curved path and the side of the module or the belt 100, 100' facing the outer side of the curved path.

The flanks of the main body 11, 11' defining the bases of the overall trapezoidal shape are referred to by 20, 20' and 21, 21' and connect, on one hand, the first longitudinal edge 17, 17' and the second longitudinal edge 18, 18' to each other and, on the other hand, the upper surface 12, 12' and the lower surface 13, 13' to each other.

In the proximity of the opposite longitudinal ends of each module 10, 10' male/female elements 22, 22' adapted to interlock with corresponding copying elements 22, 22' of other module 10, 10' adjacent thereto and radially aligned so as to form a single assembly are obtained.

According to the present invention, the main body 11, 11' has at least one hollow seat 23, 23' which is open at the lower plane PI and in which a support 24 for at least one radial reaction element 25 adapted to slidingly rest along a corresponding guide defining the curved path is insertable, in which the seat 23, 23' is shaped to accommodate an identical said support 24 regardless of the radial position in which it is obtained along the longitudinal extension of the main body 11, 11'.

That is, the seats 23, 23' are identical to each other regardless of the radial position in which they are obtained along the longitudinal extension of the main body 11, 11' of each module 10, 10' which, in itself or placed side by side with other, forms the overall width of the belt 100, 100'. The seats 23, 23', therefore, are identical to each other regardless of the radial position at which they are made along the overall width of the belt 100, 100'. "Width" of the belt 100, 100' is intended to denote its dimension along a direction transverse (particularly perpendicular) to the advancement direction.

Longitudinal extension of the main body 11, 11' means its length extension between the two opposite flanks 20, 20' and 21, 21' defining the smaller and larger bases of the trapezoidal shape thereof. Considering the module 10, 10' articulated to corresponding modules preceding and following it to form a belt 100, 100', the longitudinal extension of the respective main body 11, 11' is arranged along a radial direction of the belt 100, 100', i.e., of the respective curved path.

"Radial position" means any position along the longitudinal extension of the main body 11, 11' comprised between the two opposite flanks 20, 20' and 21, 21' thereof.

As shown in the attached figures, advantageously, each module 10, 10' comprises at least a pair of such seats 23, 23' identical to each other defined in two corresponding different radial positions along the main body 11, 11'.

Preferably, each module 10, 10' comprises a plurality of seats 23, 23' identical to each other defined in a corresponding plurality of different radial positions along the main body 11, 11'.

Advantageously, the seats 23, 23' are distributed being equally spaced from each other. Advantageously, the seats 23, 23' are distributed being equally spaced from each other with a predetermined transverse pitch, for example equal to 85 mm.

As seen from the attached figures, the seats 23, 23' are all identical to each other regardless of the radial position in which they are obtained. Thus, they are adapted to accommodate one same and identical support 24 for at least one radial reaction element 25, which, thus, can be arranged where it is more convenient, upon varying the configuration of the conveyor made with the belt 100, 100'.

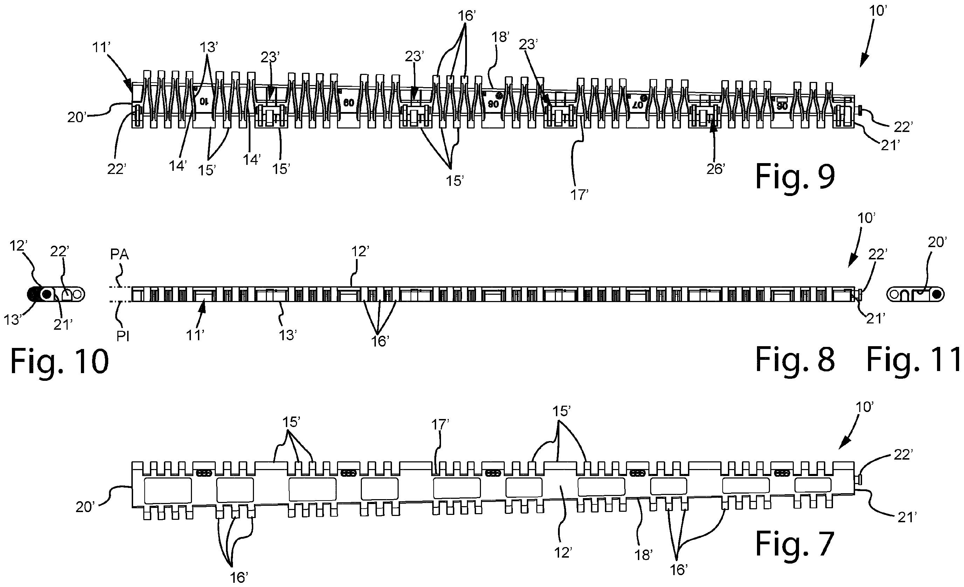

The seats 23, 23' are identical to each other even upon varying the module 10, 10', both if it is configured and sized to form an innermost radial section of a belt 100, 100' of a mono-filar conveyor or an innermost belt 100, 100' of a multi-filar conveyor (as the module 10 of figures 1 to 6A) or to form an outermost radial section of a belt 100, 100' of a mono-filar conveyor or an outermost belt 100, 100' of a multi-filar conveyor (as the module 10' of figures 7 to 12A).

That is, the seats 23, 23' are all identical to each other regardless of the radial position in which they are obtained along the longitudinal extension of the main body 11, 11' of each module 10, 10', regardless of the minimum radius of curvature makeable with the modules 10, 10'.

The seats 23, 23' are identical to each other regardless of the radial position in which they are obtained along the longitudinal extension of the main body 11, 11' of each module 10, 10' which, in itself or placed side by side with other, forms the overall width of the belt 100, 100'.

Considering a set or assembly of modules 10, 10' differing from each other in sizing to make belts 100, 100' differing from each other in the minimum radius of curvature, each of such modules 10, 10' has at least one respective identical seat 23, 23'.

As described below, each support 24 for at least one radial reaction element 25 has a shape substantially copying that of the seat 23, 23'.

Advantageously, each support 24 has a shape substantially complementary to the main body 11, 11' i.e., to the portion thereof in which the seats 23, 23' are defined.

Each support 24 is removably insertable in any seat 23, 23'.

Along a direction substantially parallel to the advancement direction of the belt 100, 100', i.e., along a direction transverse to the longitudinal extension of the module 10, 10', each seat 23, 23' extends from at least one first hinge element 15, 15' protruding from the first longitudinal edge 17, 17' towards the second opposite longitudinal edge 18, 18' without affecting, however, the second hinge elements 16, 16' protruding from the latter.

The maximum extension of the seat 23, 23' along a direction parallel to the support plane PA and orthogonal to the axes of the holes 150, 150' is smaller than the radial pitch in any of the radial positions in which it is obtained.

Each seat 23, 23' has indeed at least one first portion 230, 230' which is at least partially obtained in the body of one of the first hinge elements 15, 15' or between at least two first hinge elements 15, 15' adjacent to each other protruding from the first longitudinal edge 17, 17'. In the first case, such first portion 230, 230' of the seat 23, 23' at least partially affects the holes 150, 150' interrupting the structural continuity of the respective first hinge element 15, 15'.

Correspondingly, the support 24 comprises at least one copying hook-shaped or cylindrical-shaped first portion 240 defining an overall circular opening 241 aligning with the through hole 150, 150' of the first hinge element 15, 15' or the two first hinge elements 15, 15' for accommodating a respective hinge pin 19.

The first portion 240 of the support 24 is complementary to the first hinge element 15, 15' at which the first portion 230, 230' of the seat 23, 23' is obtained restoring the structural continuity thereof.

The seat 23, 23' comprises then at least one second portion 232, 232' at least partially obtained in the main body 11, 11' below the upper surface 12, 12' thereof.

The second portion 232, 232' of the seat 23, 23' has a prismatic shape.

The second portion 232, 232' of the seat 23, 23' is obtained between two adjacent ribs 14, 14' connecting the first hinge element 15, 15' in which its first portion 230, 230' is obtained to corresponding second hinge elements 16, 16', without reaching them.

The support 24 has a corresponding prismatic second portion 242 insertable in the second portion 232, 232' of the seat 23, 23'.

Each seat 23, 23' is at least partially obtained in a first hinge element 15, 15' advantageously having a width measured along the longitudinal extension of the module 10, 10' greater than that of the remaining hinge elements 15, 15'.

The distribution of the first hinge elements 15, 15' and the second hinge elements 16, 16' and that of the seats 23, 23' for the support 24 are such as to:
- Allow to make intermediate widths of the belts with fixed transverse pitch;
- Obtain a desired mechanical strength of the belt;
- Ensure the correct positioning of the stop ("clip") for retaining the pin 19.

As noted from the attached figures, along a direction parallel to the longitudinal extension of the main body 11, 11', each seat 23, 23' extends in width between two second adjacent hinge elements 16, 16' protruding from the second longitudinal edge 18, 18' without however affecting them or prolonging between them. That is, the width of each seat 23, 23' is lower than the distance between two hinge elements protruding from the longitudinal edge of the main body opposite to that from which the hinge elements in which it is at least partially obtained protrude.

Between each seat 23, 23' and the corresponding support 24 a form-fit, or an interlocking coupling is defined.

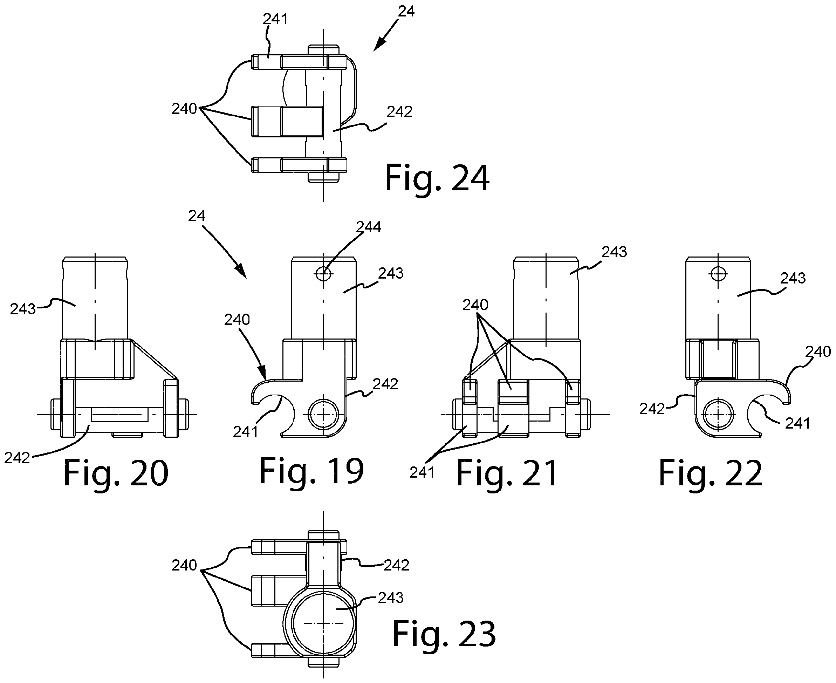

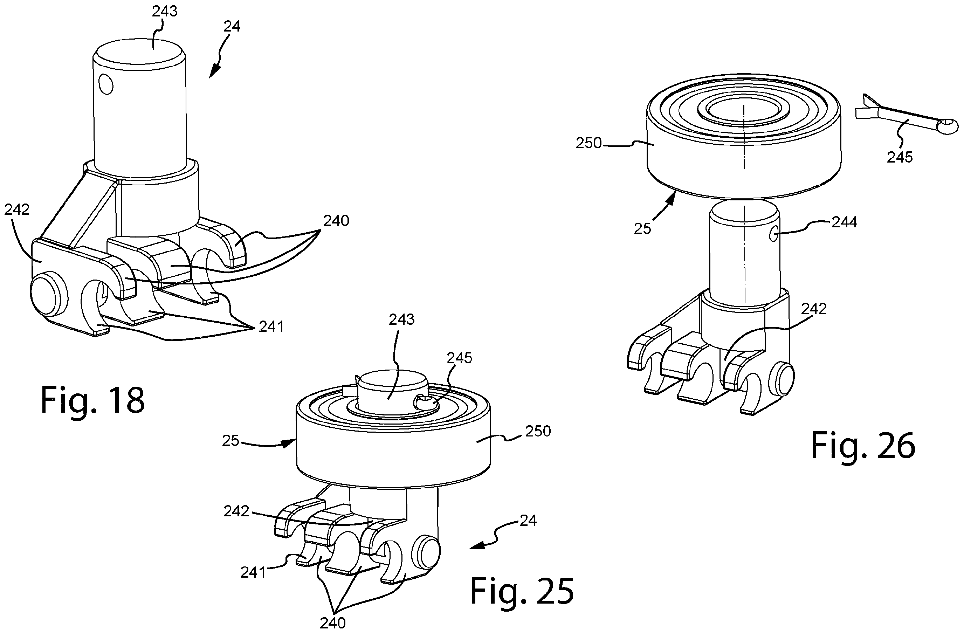

As shown in figures 18 to 26 each support 24 has a base body having in turn:
- at least one first portion 240 hook-shaped or however defining a substantially circular opening 241 aligning with the through hole 150, 150' of at least one of the first hinge elements 15, 15' or two first adjacent hinge elements 15, 15' for accommodating a respective hinge pin 19;
- at least one second portion 242 of a substantially prismatic shape from which the first portion 240 juts out.

The face of the base body of the support 24 opposite to that from which the first portion 240 protrudes is substantially flat. No hook-shaped portion, or however defining a circular opening adapted to align with the holes 160, 160' of the second hinge elements 16, 16', is defined at such face. That is, such face is free of any portion corresponding to the first portion 240 and hook-shaped or however defining a circular opening adapted to align with the holes 160, 160' of the second hinge elements 16, 16'.

The support 24, as well as the seats 23, 23', is independent from the pitch of the module/belt.

Overall, the base body has a shape copying that of the seat 23, 23' and, advantageously, complementary to the main body 11, 11'.

The first portion 230, 230' of the seat 23, 23' and the corresponding first portion 240 of the support 24 can have a discontinuous, as depicted in the attached figures, or continuous structure.

A rod 243 on which a radial reaction element 25 can be mounted extends from the base body of the support 24.

In the shown embodiment, the radial reaction element 25 consists of a ball bearing 250 which is mounted on the rod 243, being provided a retaining element 244 adapted to retain the radial reaction element 25 on the rod 243 particularly preventing the axial disengagement thereof. In the shown embodiment, the retaining element consists of a split pin 244 insertable in a hole 245 obtained on the rod 243. Alternatively, fixing with screws, interlocking, or similar can be provided.

Considering the support 24 inserted in a corresponding seat 23, 23' the rod 243 protrudes below the lower plane PI of the main body 11, 11' along a direction orthogonal to the support plane PA.

The radial reaction element 25 is totally arranged below the lower plane PI.

Considering the module 10, 10' in a mounting configuration to form a belt 100, 100', it can comprise at least one support 24 inserted in any of the seats 23, 23' to support a respective radial reaction element 25 depending on the configuration of the conveyor to be made.

Each module 10, 10' has then a plurality of notches 26, 26' at which the module itself can be cut for reducing its width. Advantageously, the notches 26, 26' are distributed equally spaced from each other with a predetermined transverse pitch, for example equal to 85 mm. Advantageously, the notches 26, 26' are obtained at the seat 23, 23'.

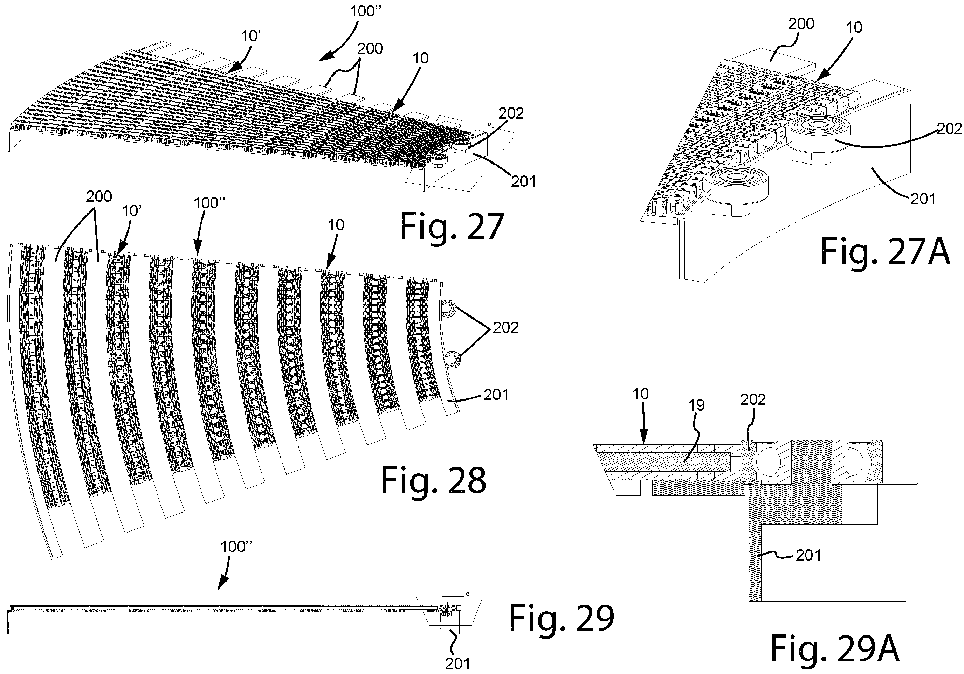

Figures 27 to 29A show a section of a first possible configuration of a mono-route conveyor comprising a curvilinear fixed-radius belt according to the present invention and the respective support and guide structure.

There is a single belt 100'' made by interlocking modules 10 and modules 10' placed side by side and aligned to each other and being articulated to corresponding pairs of modules 10 and 10' preceding and following them by means of respective hinge pins 19 to form a single belt 100'' of a width equal to the width of the two modules 10, 10'.

The belt 100'' runs in a resting manner on the so-called curvilinear runways 200 along which the lower plane PI runs in a resting manner.

On the inner side of the curved path there is a side guide 201 on which, in the depicted configuration, a plurality of radial reaction elements consisting of bearings 202 against which the inner side of the belt 100''' reacts is mounted.

In such case, the belt 100", while comprising the seats 23, 23', is mounted according to a known-art configuration, the bearings 202 being fixed to the fixed support and guide structure. It should be noted that the bearings 202 are arranged co-planar to the plane containing the axes of the hinge pins, thus making unnecessary to provide anti-overturning elements.

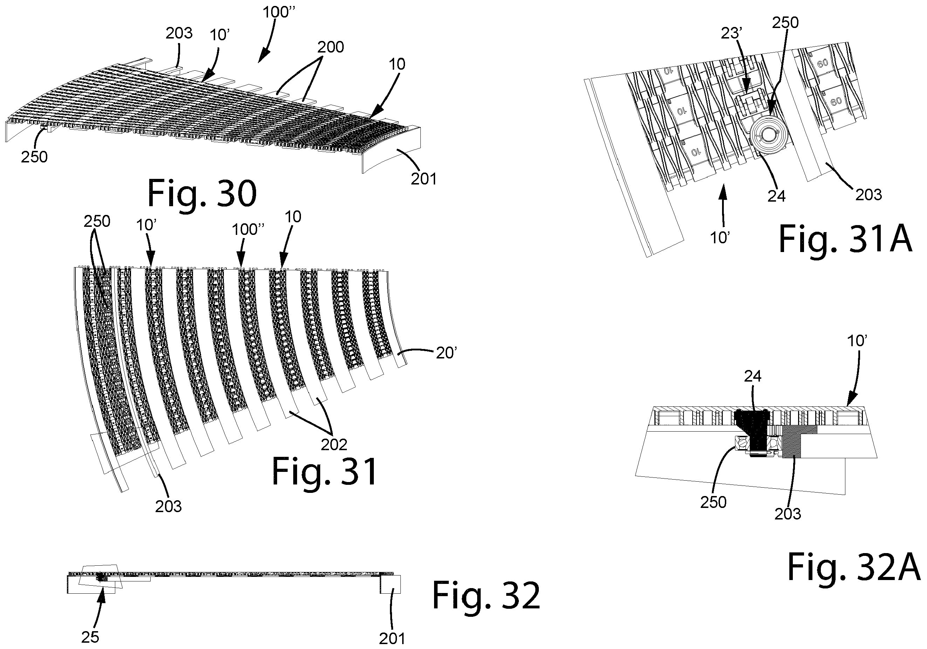

Figures 30 to 32A show a mono-filar or mono-route conveyor comprising a belt 100'' like that of figures 27 to 29A, but in which the radial reaction element 25 (bearings 250) is fixed to some modules 10, 10' by means of respective supports 24 inserted in selected seats 23' of some modules 10' to form a row. In such case, a curved wall or border 203 fixed to the support and guide structure and extending below the lower plane PI orthogonally thereto and against which such radial reaction elements 25 run in a resting manner is provided instead of a runway 200.

In figures, the radial reaction elements 25 (bearings 250) are fixed, for example, to some modules 10' forming the outermost section of the belt 100 by means of respective supports 24, separated by one or more modules 10' free of supports 24 and relative bearing 250. It is apparent that the supports 24 could be arranged in a seat 23' having a different radial position.

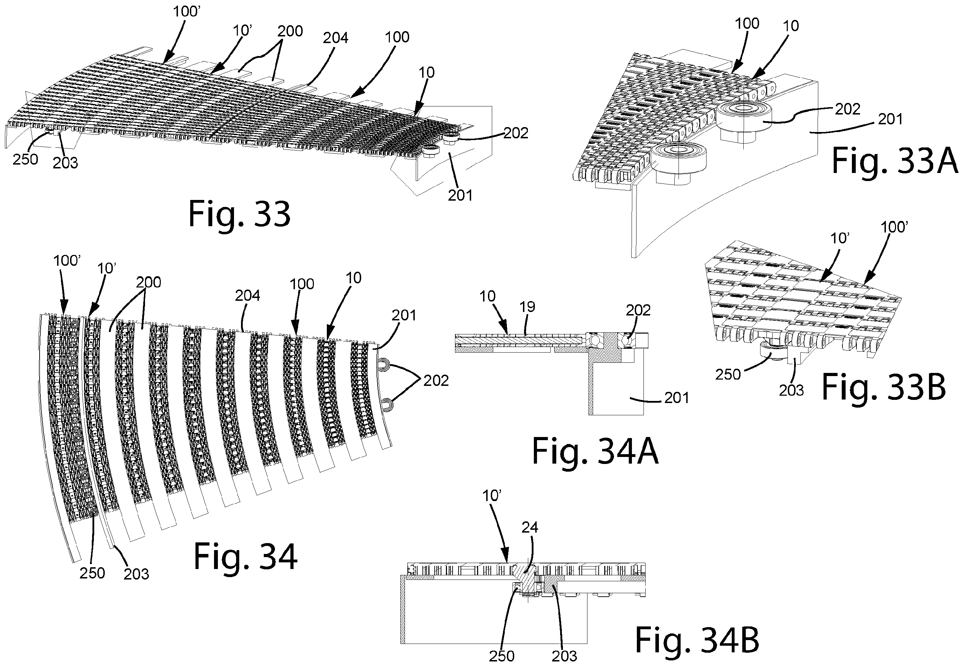

Figures 33 to 34B show a section of a possible configuration of a multi-route conveyor comprising two curvilinear fixed-radius belts 100, 100' according to the present invention placed side by side and the respective support and guide structure.

The belt 100 is formed by modules 10, the belt 100' is formed by modules 10'. The two belts 100, 100' are placed side by side to form two routes or rows separated by a spacer 204. The innermost belt 100 reacts against radial reaction elements 202 fixed to the fixed inner guide 201 according to a configuration similar to that shown in figures 27 to 29A.

The outermost belt 100' reacts against a corresponding fixed curved wall or border 203 by means of respective radial reaction elements 25 formed by bearings 250 fixed to some modules 10' by means of respective supports 24 inserted in seats 23' at a radial position selected from those available, according to a configuration similar to that of the belt 100" of figures 30 to 32.

It is apparent for those skilled in the art that the supports 24 could be inserted in any other seat 23' among those available along the longitudinal extension of each module 10'.

It is also apparent that the innermost belt 100 could be led to react by means of corresponding radial reaction elements 25 mounted on respective supports 24 inserted in any of the seats 23 obtained along the longitudinal extension of the respective modules 10, rather than on bearings 202 mounted on the fixed inner guide 201.

The present invention further refers to a curvilinear modular fixed-radius belt 100, 100', 100' adapted to travel a corresponding curved path, comprising a plurality of modules arranged in succession one after the other to form a closed loop, in which at least some of such modules are modules 10, 10' as described above.

In the case where the belt consists in width of two or more modules 10, 10' placed side by side, aligned and interlocked to each other, then the seat 23, 23' is obtained in at least one of such modules placed side by side and aligned to each other and is shaped to accommodate an identical support 24 regardless of the radial position in which it is obtained along the respective module 10, 10'.

That is, according to the present invention, the curvilinear modular fixed-radius belt has at least one radial reaction element 25 to the radial component which can be positioned transversally to the belt itself regardless of the pitch of the belt itself.

According to the present invention, indeed, such belt comprises at least some modules 10, 10' which are provided with at least one seat 23, 23' shaped for accommodating a same identical support 24 for a radial reaction element 25 regardless of the radial position in which it is obtained along the main body di said module. Module also means the assembly of multiple modules placed side by side, aligned and radially interlocked to each other.

Furthermore, it should be noted that almost all the curved fixed-radius belts available on the market have a transverse modularity of 100 mm.

The modules 10, 10' and the belts 100, 100' according to the present invention are made according to the so-called Metric standard with width transverse increasing equal to 85 mm.

In the field of conveyors for bottling and packaging one speaks about "Metric standard" and "Imperial standard." "Metric standard" means the family of belts having transverse increasing of 85 mm. "Imperial standard" means the family of belts with width transverse increasing equal to 3" (76.2 mm).

Having made the modules 10, 10' i.e., the curvilinear fixed-radius belts 100, 100' thereby obtainable with a Metric standard allows to standardize the conveyor structures, which is not possible in case of fixed-radius belts with transverse increasing equal to 100 mm.

It has been practically found that the object of the present invention achieves the intended purposes.

Indeed, the radial reaction element (bearing) can be positioned regardless of the pitch of the module, or the belt made therewith.

Multiple configurations of mono- and multi-route conveyors can be made using always and only a same support for a radial reaction element, thus reducing the need for differently configured and sized supports.

Furthermore, mounting, dismounting, and replacing each support on each module is simple and quick as can be immediately understood by those skilled in the art.

The module of a curvilinear modular fixed-radius conveyor belt and the corresponding belt thus conceived are subject to a number of modifications and variations, all falling within the invention; furthermore, all the details are replaceable by technically equivalent elements. In practice, the used materials, as well as the sizes, can be whatever depending on the technical requirements.

## Claims

1. Module (10, 10') of a curvilinear modular fixed-radius conveyor belt (100, 100', 100") adapted to travel a corresponding curved path, said module (10, 10') comprising a main body (11, 11') extending between an upper surface (12, 12') forming a support plane (PA) of products to be conveyed and a lower surface (13, 13') forming a lower plane (PI) spaced from the support plane (PA), wherein said main body (11, 11') has a pair of opposite longitudinal edges, respectively a first longitudinal edge (17, 17') and a second longitudinal edge (18, 18'), from each of which protrudes at least one hinge element, respectively at least one first hinge element (15, 15') and at least one second hinge element (16, 16'), crossed by a respective through hole (150, 150' 160, 160') adapted to accommodate a respective hinge pin (19) articulating said module (10, 10') with another said module (10, 10') preceding or following thereto around an articulation axis parallel to said support plane (PA) and orthogonal to the advancement direction of said belt (100, 100', 100"), wherein said main body (11, 11') in plan has an overall trapezoidal shape whose smaller base and whose larger base respectively define the side of said belt (100, 100', 100") facing the inner side of said curved path and the side of said belt (100, 100', 100") facing the outer side of said curved path, **characterised in that** said main body (11, 11') has at least one hollow seat (23, 23') open at said lower plane (PI) and wherein a support (24) for at least one radial reaction element (25) is insertable, said radial reaction element being adapted to slidingly rest along a corresponding wall (203) defining said curved path, wherein said seat (23, 23') is shaped to accommodate an identical said support (24) regardless of the radial position in which it is obtained along said main body (11, 11').

2. Module (10, 10') according to claim 1, **characterised in that** it comprises at least one pair of said seats (23, 23') identical to each other defined in two different radial positions along said main body (11, 11').

3. Module (10, 10') according to claim 1 or 2, **characterised in that**, along a direction parallel to said advancement direction of said belt (100, 100', 100"), said seat (23, 23') extends from at least a first hinge element (15, 15') protruding from said first longitudinal edge (17, 17') towards said second opposite longitudinal edge (18, 18') without affecting said second hinge elements (16, 16') protruding from the latter.

4. Module (10, 10') according to claim 3, **characterised in that** said seat (23, 23') has at least a first portion (230, 230') which is at least partially obtained in the body of one of said first hinge elements (15, 15') or between at least two said adjacent first hinge elements protruding from said first longitudinal edge (17, 17'), said support (24) comprising at least one complementary first hook-shaped or cylindrical-shaped portion (240) defining a substantially circular opening (241) aligned with the hole (150, 150') of said first hinge element (15, 15') or of said two first hinge elements for accommodating a respective said hinge pin (19).

5. Module (10, 10') according to claim 3 or 4, **characterised in that** said seat (23, 23') comprises at least a second portion (232, 232') obtained at least in part in the main body (11, 11') of said module below said upper surface (12, 12') and having a substantially prismatic shape, said support (24) having a corresponding second substantially prismatic portion (242) insertable in said second portion (232, 232') of said seat (23, 23').

6. Module (10, 10') according to one or more of the preceding claims, **characterised in that**, in a direction parallel to the longitudinal extension of said main body (11, 11'), said seat extends between two said adjacent second hinge elements (16, 16') protruding from said second longitudinal edge (18, 18').

7. Module (10, 10') according to one or more of the preceding claims, **characterised in that** a form fit is defined between said seat (23, 23') and said support (24) .

8. Module (10, 10') according to one or more of the preceding claims, **characterised in that** it comprises at least one said support (24) inserted in said at least one seat (23, 23').

9. Module (10, 10') according to claim 8, **characterised in that** said radial reaction element (25) comprises a bearing (250) rotatable around a rod (243) protruding from said support (24) along a direction orthogonal to said support plane (PA), wherein said bearing (250) is arranged totally below said lower plane (PI).

10. Support (24) for at least one radial reaction element (25) couplable in said at least one seat (23, 23') obtained in a module (10, 10') according to one or more of the preceding claims.

11. Support (249) according to claim 10, **characterised in that** it comprises a base body of a shape complementary to that of said seat (23, 23').

12. Support according to claim 11, **characterised in that** said base body comprises at least a first substantially hook-shaped or cylindrical-shaped portion (240) defining a circular opening (241) aligning with the hole (150, 150') of at least one of said first hinge elements (15, 15') or of said two adjacent first hinge elements (15, 15') for accommodating a respective said hinge pin (19).

13. Support (24) according to claim 12, **characterised in that** said base body comprises a second prismatic portion (242) from which said first portion (241) protrudes.

14. Support (24) according to any one of claims 10 to 13, **characterised in that** said base body has a face opposite that from which said at least a first portion (240) protrudes which is substantially flat or lacking substantially hook-shaped or cylindrical protrusions defining a respective circular opening.

15. Support (24) according to any one of claims 10 to 14, **characterised in that** it comprises a rod extending from said base body and around which at least one bearing forming said radial reaction element is mountable.

16. Curvilinear modular fixed-radius conveyor belt (100, 100', 100') adapted to travel a corresponding curved path, comprising a plurality of modules arranged in succession one after the other and articulated by respective hinge pins, wherein at least some of said modules are modules (10, 10') according to any one of claims 1 to 9.

17. Conveyor belt (100, 100', 100") according to claim 16, **characterised in that** it comprises a plurality of said supports (24) inserted in corresponding said seats (23, 23').
